# EUROPÄISCHE PATENTSCHRIFT

(11) **EP 3 215 410 B1**
(45) Veröffentlichungstag und Bekanntmachung des Hinweises auf die Patenterteilung: **13.03.2019**
(21) Anmeldenummer: 15767169.4
(22) Anmeldetag: 24.09.2015
(51) Int. Cl.: B62D 3/12, F16F 1/373

(54) **ANSCHLAGDÄMPFER**
STOP DAMPER
AMORTISSEUR DE BUTÉE

(30) Priorität: 05.11.2014 DE 102014016276
(43) Veröffentlichungstag der Anmeldung: 13.09.2017
(73) Patentinhaber: ThyssenKrupp Presta AG, 9492 Eschen (LI)
(72) Erfinder: MOLNAR, Helmut, 73635 Rudersberg (DE)
(74) Vertreter: thyssenkrupp Intellectual Property GmbH
(86) Internationale Anmeldenummer: PCT/EP2015/071953
(87) Internationale Veröffentlichungsnummer: WO 2016/071038

(56) Entgegenhaltungen:
- EP-A1- 1 500 573
- WO-A1-2005/028284
- DE-A1-102007 012 655
- DE-U1- 9 418 346
- JP-A- H1 178 914
- JP-A- H08 133 102
- JP-A- H10 297 504
- JP-U- S56 116 269
- JP-U- S61 196 870
- US-A1- 2006 131 828

## Beschreibung

### Stand der Technik

Die Erfindung betrifft einen Anschlagdämpfer, umfassend ein ringförmiges Trägerelement, das eine erste und zweite axiale Stirnseite und sich dazwischen erstreckende Mantelflächen und eine zentrale Öffnung aufweist, wobei zumindest auf der ersten Stirnseite mindestens ein Dämpfungselement aus elastischem Material angebracht ist, das in axialer Richtung von der Stirnseite vorsteht.

Anschlagdämpfer der eingangs genannten Art werden in Fahrzeuglenkungen eingesetzt, bei denen ein in einem Lenkgetriebe axial verschiebliches Element, in der Regel eine Zahnstange, über ein Axialkugelgelenk auf beiden Seiten jeweils gelenkig mit einer Spurstange verbunden ist. Die maximal mögliche Lenkbewegung der Lenkung wird dadurch begrenzt, dass, wenn die Zahnstange relativ zum Lenkgetriebe maximal in eine Richtung axial verschoben ist, das Axialkugelgelenk mit einer axialen Stirnfläche gegen eine entsprechende axiale Gegenfläche des Lenkgetriebegehäuses anschlägt.

Zur Vermeidung von unerwünschten Anschlaggeräuschen und Schäden an der Lenkung durch Kraftspitzen, die beim harten Auftreffen des Axialkugelgelenks auf das Lenkgetriebe auftreten können, ist es bekannt, mechanische Anschlagdämpfer der eingangs genannten Art als Stoß-Dämpfungselemente zwischen den einander gegenüberliegenden Anschlagflächen des Axialkugelgelenks und des Lenkgetriebes einzubauen.

Ein derartiger gattungsgemäßer Anschlagdämpfer ist im Stand der Technik beispielsweise in der WO 2009/094972 A1 beschrieben. Eine daraus bekannte Bauform umfasst ein elastisches Dämpfungselement in Form mindestens eines gummielastischen Elastomerkörpers, der auf einem ringförmigen bzw. ringscheibenförmigen Trägerelement angebracht ist. Das Trägerelement ist auf der dem Lenkgetriebegehäuse zugewandten Stirnfläche des Axialkugelgelenks koaxial zur Längsachse der Zahnstange angebracht, so dass der Elastomerkörper in Richtung gegen das Lenkgetriebegehäuse axial vorsteht. Beim Erreichen der Endlage trifft folglich das Dämpfungselement auf die Anschlagfläche des Lenkgetriebes, und wird dabei axial gestaucht. Dadurch, dass das Dämpfungselement deutlich weicher ist als das Lenkgetriebegehäuse, werden aufgrund der Elastizität und inneren Reibung des Elastomermaterials Kraftspitzen abgefangen und ausgeglichen. Außerdem werden unerwünschte Anschlaggeräusche weitgehend unterdrückt.
Aus der WO 2005/123484 A1 ist ebenfalls ein Anschlagdämpfer mit einem ringförmigen Trägerelement bekannt, auf dessen einer axialen Stirnseite segmentartig ausgebildete Elastomer-Dämpfungselemente angebracht sind.

Aus der JP-H10 297504 A ist ein Anschlagdämpfer bekannt nach den Merkmalen des Oberbegriffs des Anspruchs 1, der ein ringförmiges Trägerelement und eine zentrale Öffnung aufweist. Das elastische Dämpfungselement weist außerhalb der Öffnung angeordnete, einzeln axial vorstehende Nocken auf. Die Nocken werden beim Anschlag stark verformt, so dass ein hoher Verschleiß auftritt. Außerdem ist eine relativ große Mindestabmessung der Nocken erforderlich, um eine vorgegebene Dämpfungswirkung zu realisieren.
Nachteilig an den im Stand der Technik bekannten Anschlagdämpfern ist, dass bei gegebenen Materialeigenschaften, wie Elastizität, Härte, Rückstellverhalten und innerer Reibung, des Dämpfungselements nur beschränkte Möglichkeiten zur Gestaltung der Dämpfungscharakteristik bestehen.
Angesichts der vorangehend erläuterten Problematik ist es eine Aufgabe der vorliegenden Erfindung, einen Anschlagdämpfer anzugeben, welcher verbesserte Möglichkeiten zur Gestaltung der Dämpfungscharakteristik und einen geringeren Verschleiß bei kompakten Abmessungen bietet.
Zur Lösung der vorgenannten Problematik wird erfindungsgemäß vorgeschlagen, dass das Elastomerelement innerhalb des kreisringförmigen stirnseitigen Flächenbereich des Trägerelements mindestens eine axial durchgehende Durchbrechung aufweist, die sich nicht über den Bereich der zentralen Öffnung des ringförmigen Trägerelements erstreckt.

Erfindungsgemäß ist mindestens ein Elastomerelement, mit mindestens einer Durchbrechung versehen, die in dem kreisringförmigen bzw. ringscheibenförmigen, stirnseitigen Flächenbereich des Trägerelements angeordnet ist. Eine Durchbrechung kann durch eine axial durchgehende Öffnung im Elastomerelement realisiert werden, die einen Durchgang zur stirnseitigen Oberfläche des Trägerelements bildet. Dadurch, dass das Elastomerelement axial auf der ersten Stirnseite des Trägerelements befestigt ist, umgrenzt eine derartige Öffnung mit ihrem inneren Rand einen freien Bereich der axialen Stirnseite des Trägerelements. Eine Durchbrechung des Dämpfungselements befindet sich erfindungsgemäß innerhalb des kreisringfömigen stirnseitigen Flächenbereichs des Trägerelements, erstreckt sich folglich nicht über den Bereich der zentralen Öffnung des ringförmigen Trägerelements, mit der dieses auf einer Spurstange bzw. einem Axialkugelgelenk angebracht wird.

Ein Vorteil der Erfindung ist, dass die Dämpfungseigenschaften eines Elastomer-Dämpfungselements durch Auswahl von Abmessung, Form und gegebenenfalls Anzahl der Durchbrechungen mit einem geringeren konstruktiven Aufwand und in weiteren Grenzen als im Stand der Technik eingestellt werden können. Die beim axialen Auftreffen am Anschlag auftretende axiale Stauchung des Dämpfungselements führt nämlich zu einer Verdrängung des Elastomermaterials in radialer Richtung und in Umfangsrichtung, d. h. mit einer Bewegungskomponente zu den freien Randflächen des Elastomerelements. Während bei den im Stand der Technik bekannten, durchgehend massiven Dämpfungselementen das Elastomermaterial lediglich zum Außenrand des Elastomerkörpers hin ausweichen kann, wird das Elastomermaterial bei einer axialen Stauchung eines erfindungsgemäßen Dämpfungselements von den inneren Randflächen in den freien Öffnungsquerschnitt der erfindungsgemäßen Durchbrechung oder Durchbrechungen gedrängt. Mit anderen Worten kann bereits durch Größe, Form, Anordnung und Anzahl der Durchbrechungen die zum Ausweichen des Elastomermaterials zur Verfügung stehende Randfläche bei einer gegebenen Außenabmessung des Dämpfungselements in weiten Grenzen eingestellt werden, so dass eine bestimmte Dämpfungscharakteristik erreicht wird. Dabei ist es wesentlich, dass eine erfindungsgemäße Durchbrechung innerhalb einer Stirnfläche des Trägerelements liegt, also die zentrale Durchgangsöffnung des ringförmigen Trägerelements nicht innerhalb einer erfindungsgemäßen Durchbrechung liegt. Auf diese Weise ist es möglich, aus einem gegebenen Elastomermaterial optimal an die jeweiligen Vorgaben angepasste Dämpfungselemente herzustellen. Dies kommt einer rationellen Fertigung besonders entgegen, da keine oder zumindest weniger unterschiedliche Elastomermaterialien mit unterschiedlichen Materialeigenschaften verarbeitet werden müssen.

Ein weiterer Vorteil der erfindungsgemäßen Gestaltung des Dämpfungselements ist, dass mit einem einzigen oder nur wenigen Dämpfungselementen unterschiedlichste Dämpfungseigenschaften fertigungstechnisch besonders einfach realisierbar sind.

Vorzugsweise ist eine Mehrzahl von Durchbrechungen gleichmäßig über den Umfang des Dämpfungselements verteilt angeordnet. Dies kann durch eine symmetrische Anordnung von Öffnungen in der Stirnseite realisiert werden. Dadurch ist es konstruktiv und fertigungstechnisch einfach möglich, ein einteiliges Dämpfungselement vorzusehen, welches sich über eine Stirnseite des Trägerelements erstreckt und eine oder mehrere erfindungsgemäße Durchbrechungen bzw. Öffnungen aufweist.

Eine besonders bevorzugte Ausführungsform der Erfindung sieht vor, dass das Dämpfungselement zumindest ein erstes Teilelement umfasst, welches sich über einen ersten Umfangsbereich erstreckt und zumindest ein zweites Teilelement, welches sich über einen zweiten Umfangsbereich erstreckt und bezüglich der Mittelachse des Trägerelements koaxial mit radialem Abstand zum ersten Teilelement angeordnet ist. Auf diese Weise wird zwischen dem ersten und zweiten Teilelement eine kreisringförmige Durchbrechung gebildet. Die erfindungsgemäße Durchbrechung wird begrenzt durch die einander zugewandten Randbereiche des ersten und zweiten Teilelements, d.h. die Durchbrechung wird gebildet durch einen freien Bereich zwischen mindestens einem ersten und einem zweiten Teil-Dämpfungselement. Das erste Teilelement kann beispielsweise als ringförmiges Dämpfungselement aus Elastomermaterial ausgebildet sein, welches sich über einen radial außenliegenden koaxialen Bereich der ersten Stirnseite des Trägerelements erstreckt. Der innere Rand des ersten Teilelements ist mit einem ersten Radius von der Mittelachse des Trägerrings beabstandet. Das zweite Teilelement kann ebenfalls ringsegmentförmig oder ringförmig ausgestaltet sein, und kann auf der ersten Stirnseite koaxial, d.h. konzentrisch innerhalb des von dem ersten Teilelement umschlossenen Bereichs angeordnet sein. Der äußere Rand des zweiten Teilelements ist mit einem zweiten Radius von der Mittelachse des Trägerrings beabstandet, wobei der zweite Radius kleiner ist als der vorgenannte erste Radius, nämlich der innere Radius des ersten Teilelements. Zwischen dem ersten und dem zweiten Teilelement wird eine erfindungsgemäße Durchbrechung gebildet, welche ringsegment- oder ringförmig ist mit einer radialen Breite, die der Differenz zwischen dem ersten und zweiten Radius entspricht. Bei einer axialen Stauchung eines oder beider Teilelemente kann das Elastomermaterial jeweils radial zum inneren und äußeren Rand verdrängt werden, was bedeutet, dass es auch in den Bereich der kreisringförmigen Durchbrechung ausweicht.

Bevorzugt erstrecken sich das erste und zweite Teilelement über den gesamten Umfangsbereich, bilden also jeweils einen geschlossenen Ring. Es sind allerdings auch in Umfangsrichtung abschnittsweise ringsegmentförmige Ausbildungen des oder der Teilelemente denkbar.

Es ist weiterhin vorteilhaft, dass ein Teilelement eine größere Abmessung in axialer Richtung hat als das andere Teilelement. In Richtung der Mittelachse des Trägerrings gesehen hat beispielsweise das erste Teilelement eine größere Dicke hat als das zweite Teilelement, oder umgekehrt. Das hat zur Folge, dass beim Anschlag des Anschlagdämpfers zunächst das dickere Teil-Dämpfungselement (Teilelement) das Lenkgetriebegehäuse berührt und axial gestaucht wird. Dabei wird das Elastomermaterial zu den Rändern radial verdrängt. Durch die Verformung erfolgt eine erste Dämpfung des Anschlags. Erst danach schlägt das zweite, im Verhältnis zum ersten Teilelement dünnere zweite Teilelement an, und entfaltet seine Dämpfungswirkung, die sich zur Dämpfung des ersten Teilelements addiert. Die Gestaltung des Dickenverhältnisses zwischen dem ersten und zweiten Teilelement ermöglicht die Realisierung einer differenziert abgestuften Dämpfungscharakteristik.

Bevorzugt hat das Dämpfungselement einen größeren Außendurchmesser als das Trägerelement. Dabei steht das Dämpfungselement, bevorzugt ein ringförmiges Teilelement aus Elastomermaterial, radial nach außen über den Trägerring vor. Dadurch können harte Anschläge des Anschlagdämpfers in radialer Richtung, beispielsweise gegen die Innenwand einer Aufnahmeöffnung des Lenkungsgehäuses, ebenfalls durch Elastomermaterial gedämpft werden, wodurch Störgeräusche wirksam unterdrückt werden.

Bei einer bevorzugten Ausführungsform der Erfindung sind das erste und das zweite Teilelement über mindestens ein Verbindungselement miteinander verbunden, das sich über einen dritten Umfangsbereich erstreckt, der kleiner ist als der erste und zweite Umfangsbereich. Ein Verbindungselement ist bevorzugt als schmaler Verbindungssteg ausgebildet, der sich im Wesentlichen in radialer Richtung zwischen dem zweiten Teilelement und dieses mit radialem Abstand koaxial umgebenden ersten Teilelement angeordnet ist. Vorzugsweise werden mehrere Verbindungselemente gleichmäßig, d.h. in gleichen Winkelabständen über den Umfang des ringförmigen Trägerelements verteilt angeordnet. Auf diese Weise werden jeweils durch zwei benachbarte Verbindungselemente, einen inneren Randabschnitt des ersten Teilelements und einen äußeren Randabschnitt des zweiten Teilelements kreisringsegmentförmige Durchbrechungen begrenzt. Gleichmäßig über den Umfang verteilte schmale Verbindungselemente entsprechen im Wesentlichen der Anordnung der Speichen eines Rades, wobei das ringförmige erste Teilelement mit dem Radreifen und das zweite Teilelement mit der Radnabe korrespondieren. Ein Vorteil ist, dass das oder die Verbindungselemente die Teilelemente zu einem einzigen zusammenhängenden Dämpfungskörper miteinander verbinden, der in seiner Gesamtheit fertigungstechnisch besonders günstig einstückig mit dem Trägerkörper verbunden werden kann, beispielsweise als Elastomerkörper an den Trägerkörper in einem Spritzgussverfahren angespritzt werden kann.

Bevorzugt hat das Verbindungselement in axialer Richtung eine kleinere Abmessung als das erste und zweite Teilelement. Dadurch, dass das oder die Verbindungselemente in axialer Richtung eine geringere Dicke haben, treffen beim Anschlag zuerst das erste und zweite Teilelement an der Anschlagfläche des Lenkungsgehäuses an und werden axial gestaucht. Erst wenn diese bis auf die Dicke eines Verbindungselements komprimiert sind, werden die Verbindungselemente ebenfalls axial gestaucht. Praktisch tritt erst dann die zusätzliche Dämpfungswirkung der Verbindungselemente hinzu, wodurch eine härtere Dämpfung realisiert wird. Durch eine gestufte Ausbildung der axialen Abmessungen von erstem und zweitem Teilelement und Verbindungselement ist es möglich, eine mehrfach gestufte Dämpfungscharakteristik des Anschlagdämpfers zu realisieren.

Es ist vorteilhaft, dass das Dämpfungselement eine konisch geformte axiale Stirnseite aufweist. Dabei hat zumindest ein Teilelement des Dämpfungselements eine im Wesentlichen zumindest abschnittweise konusmantelförmig geformte Stirnseite, die sich vom Trägerelement aus gesehen in Richtung der Mittelachse des Trägerelements trichterförmig öffnet. Beim Anschlag trifft zunächst der am weitesten axial vorstehende Randbereich auf die Gegenfläche auf, im weiteren Verlauf werden dann nach und nach weiter zurückliegende Innenbereiche axial verformt. Dadurch kann die Dämpfungswirkung beim Anschlag sanft ansteigend ausgestaltet werden.

Bevorzugt ist das Dämpfungselement stoffschlüssig mit dem Trägerelement verbunden. Das Dämpfungselement kann beispielsweise mit dem Trägerelement fest verklebt sein. Besonders bevorzugt wird das Dämpfungselement aus einem Synthesekautschuk gefertigt, beispielsweise Acrylnitril-Butadien-Kautschuk, der zum einen besonders vorteilhafte Materialeigenschaften hinsichtlich Dämpfungscharakteristik und Verschleiß hat und bei der Herstellung stoffschlüssig an seiner Kontaktfläche an dem Trägerelement anvulkanisiert werden kann.

Weitere vorteilhafte Ausführungen der Erfindung sehen vor, dass das Dämpfungselement mit der außen umlaufenden Mantelfläche verbunden ist und/oder dass das Dämpfungselement mit der zweiten Stirnseite verbunden ist. Dadurch kann der Elastomerkörper des Dämpfungselements den Außenrand des Trägerelements an zwei Seiten - erste Stirnseite und Mantelfläche - oder an drei Seiten - erste und zweite Stirnseite und Mantelfläche - formschlüssig umgreifen. In Kombination mit einer stoffschlüssigen Verbindung, beispielsweise Vulkanisation, kann eine auch unter widrigsten Belastungen nahezu unzerstörbare Verbindung zwischen Dämpfungselement und Trägerkörper realisiert werden.

### Kurze Beschreibung der Zeichnungen

Vorteilhafte Ausführungsformen der Erfindung werden im Folgenden anhand der Zeichnungen näher erläutert. Im Einzelnen zeigen:
- Figur 1: einen radialen Schnitt durch einen erfindungsgemäßen Anschlagdämpfer,
- Figur 2: eine axiale Ansicht des Anschlagdämpfers gemäß Fig.1 von oben in Richtung der Mittelachse,
- Figur 3: eine Detaildarstellung der Schnittansicht aus Fig.1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Ein erfindungsgemäßer Anschlagdämpfer 1 ist in seiner Grundform kreisring- bzw. kreisscheibenförmig ausgebildet mit einer Mittelachse M. Der Anschlagdämpfer 1 umfasst einen Trägerkörper 2, der ringscheibenförmig ausgebildet ist mit einer ersten Stirnseite 21 und einer gegenüberliegenden zweiten Stirnseite 22 sowie sich dazwischen erstreckenden inneren und äußeren Mantelflächen 23 und 24. Der Trägerkörper 2 besteht bevorzugt aus einem biegesteifen, festen Metall- oder Kunststoffmaterial.

Auf der ersten Stirnseite des Trägerkörpers 2 ist ein Dämpfungselement 3 angebracht, welches bevorzugt aus einem Elastomermaterial, beispielsweise einem Synthesekautschuk wie Acrylnitril-Butadien-Kautschuk gefertigt ist, welches im Vergleich zum Material des Trägerkörpers 2 weicher ist. Das Dämpfungselement 3 ist an seinen Kontaktflächen stoffschlüssig mit dem Trägerkörper 2 verbunden, beispielsweise verklebt oder anvulkanisiert.

Das Dämpfungselement 3 umfasst ein erstes Teilelement 31 und ein zweites Teilelement 32. Das erste Teilelement 31 ist auf der ersten Stirnseite 21 im radial äußeren Bereich des Trägerkörpers 2 koaxial umlaufend angebracht, wobei sein innerer Rand 311 mit einem ersten Radius R von der Mittelachse M des Trägerrings 2 beabstandet ist. Das zweite Teilelement 32 ist ebenfalls ringförmig ausgebildet und koaxial innerhalb des ersten Teilelements 31 auf der ersten Stirnseite 21 angeordnet. Der äußere Rand 321 des zweiten Teilelements 32 ist mit einem zweiten Radius r von der Mittelachse M des Trägerrings 2 beabstandet, wobei der zweite Radius r kleiner ist als der vorgenannte erste Radius R.

Das erste Teilement 31 und das zweite Teilelement 32 sind über eine Mehrzahl von radialen Verbindungselementen 4 miteinander verbunden, die als schmale Verbindungsstege ausgestaltet sind und sich jeweils über einen Bruchteil des gesamten Umfangsbereichs erstrecken, deren Umfangsbereich folglich kleiner ist als der von den Teilelementen 31, 32 abgedeckte gesamte Umfangsbereich. Im gezeigten Beispiel sind insgesamt zwölf Verbindungselemente 4 in gleichen Winkelabständen von 30° symmetrisch über die Stirnseite 21 des Trägerelements verteilt angeordnet.

Zwischen dem ersten Teilelement 31 und dem zweiten Teilelement 32 ein freier Bereich gebildet, welcher ringförmig ist mit einer radialen Breite, die der Differenz (R-r) zwischen den Radien r, R entspricht. Der ringförmige Bereich wird durch die Verbindungselemente 4 in Umfangsrichtung unterteilt, so dass erfindungsgemäß ringsegmentförmige Durchbrechungen 5 gebildet werden. Jede einzelne Durchbrechung 5 wird begrenzt durch die einander in Umfangsrichtung gegenüberliegenden Seitenränder 41 benachbarter Verbindungselemente 4 und den zwischen den Verbindungselementen 4 verlaufenden Abschnitten des inneren Randes 311 des Teilelements 31 und des äußeren Randes 321 des Teilelements 32. Dadurch hat eine Durchbrechung 5 jeweils die Form eines Kreisringscheibensegments. Dabei befinden sich die Durchbrechungen 5 im Flächenbereich der ersten Stirnseite 21 des Trägerelements 2, mit anderen Worten wir eine Durchbrechung 5 axial durch das Trägerelement 2 abgedeckt, anders ausgedrückt liegt die erste Stirnseite 21 des Trägerelements 2 im Bereich einer Durchbrechung 5 frei.

Die Anzahl der Durchbrechungen 5 korrespondiert mit der Anzahl der Verbindungselemente 4.

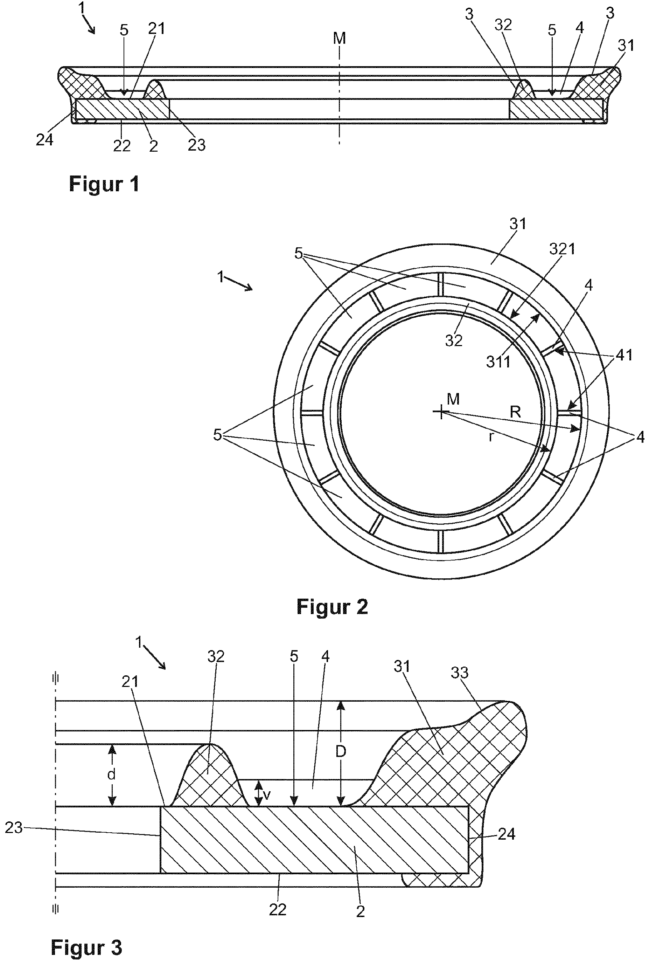

Von der ersten Stirnseite 21 des Trägerelements 2 aus gesehen in Richtung der Mittelachse M hat das erste Teilelement 31 eine Dicke D, was besonders gut in Fig.3 erkennbar ist. das zweite Teilelement 32 hat eine Dicke d, die kleiner ist als D. Ein Verbindungselement 4 hat eine Dicke v, die wiederum kleiner ist als d. Es gilt folglich: D > d > v.

Das Teilelement 31 weist in seinem äußersten Bereich, der in Richtung der Mittelachse axial am weitesten vom Trägerelement 2 vorsteht, eine konusmantelförmig geformte axiale Stirnseite 33 auf. Dadurch weitet sich das erfindungsgemäße Dämpfungselement 2 vom Trägerelement 2 aus gesehen trichterförmig nach außen auf. Dabei steht das Teilelement 31 mit seinem äußeren Rand radial über das Trägerelement 2 vor.

Wie in Figur 3 deutlich erkennbar ist, ist das Teilelement 31 nicht nur mit der ersten Stirnseite 21, sondern auch mit der äußeren Mantelfläche 24 und der zweiten Stirnseite 22 des Trägerelements 2 verbunden, vorzugsweise durch Verklebung oder Vulkanisation. Mit anderen Worten wird das Trägerelement 2 am Außenrand von dem Dämpfungselement 3 formschlüssig umgriffen.

Beim Erreichen des Endanschlags einer Lenkung trifft das Dämpfungselement 1 in Richtung der Mittelachse M auf eine der ersten Stirnseite 21 gegenüberliegende, hier nicht gezeigte Gegenfläche eines Lenkungsgehäuses auf. Zuerst berührt das erste Teilelement 31 mit seinem äußeren Rand die Gegenfläche, so dass zunächst der konusmantelförmige Bereich 33 in axialer Richtung deformiert wird. Anschließend wird das erste Teilelement 31 als Ganzes axial gestaucht. Dabei wird Elastomermaterial vom inneren Rand 311 in den Bereich der Durchbrechung 4 verdrängt. Wird das Dämpfungselement 2 beim Anschlag axial weiter komprimiert, kommt bei einem Abstand d der Stirnseite 21 des Trägerelements 2 das zweite Teilelement 32 ebenfalls in Kontakt mit der Gegenfläche, wobei Elastomermaterial vom äußeren Rand 321 in den Bereich der Durchbrechung 4 verdrängt wird. Dadurch wird die Dämpfungs stufenweise härter. Falls die Aufprallenergie des Anschlags nicht vollständig durch Deformation der ersten und zweiten Teilelemente 31 und 32 aufgenommen worden ist, kann die restliche Energie durch Deformation der Verbindungselemente 4 umgesetzt werden, wobei das Elastomermaterial ebenfalls in die Durchbrechungen 5 verdrängt werden kann.

### Bezugszeichenliste

- 1: Anschlagdämpfer
- 2: Trägerelement
- 21: erste Stirnseite
- 22: zweite Stirnseite
- 23: innere Mantelfläche
- 24: äußere Mantelfläche
- 3: Dämpfungselement
- 31: erstes Teilelement
- 311: innerer Rand
- 32: zweites Teilelement
- 321: äußerer Rand
- 33: konische Stirnseite
- 4: Verbindungselement
- 41: Seitenrand
- 5: Durchbrechung
- M: Mittelachse
- R: Radius
- r: Radius
- D: Dicke
- d: Dicke
- v: Dicke

## Patentansprüche

1. Anschlagdämpfer (1) für eine Spurstange bzw. einem Axialkugelgelenk, umfassend ein kreisringförmiges Trägerelement (2), das eine erste und zweite axiale Stirnseite (21, 22) und sich dazwischen erstreckende Mantelflächen (23, 24) und eine zentrale Öffnung aufweist mit der das Trägerelement auf einer Spurstange bzw. einem Axialkugelgelenk angebracht wird, wobei auf der ersten axialen Stirnseite (21) ein Elastomerelement (3) axial auf der ersten axialen Stirnseite (21) des Trägerelements (2) befestigt ist, und das Elastomerelement (3) die zentrale Öffnung mit ihrem inneren Rand (321) einen freien Bereich der axialen Stirnseite (21) des Trägerelements (2) umgrenzt, und das in axialer Richtung von der axialen Stirnseite (21) vorsteht, **dadurch gekennzeichnet,**
**dass** das Elastomerelement (3) innerhalb des kreisringförmigen stirnseitigen Flächenbereich des Trägerelements (2) mindestens eine axial durchgehende Durchbrechung (5) aufweist, die sich nicht über den Bereich der zentralen Öffnung des ringförmigen Trägerelements (2) erstreckt.

2. Anschlagdämpfer nach Anspruch 1, **dadurch gekennzeichnet, dass** eine Mehrzahl von Durchbrechungen (5) gleichmäßig über den Umfang des Elastomerelement (3) verteilt angeordnet ist.

3. Anschlagdämpfer nach Anspruch 1, **dadurch gekennzeichnet, dass** das Elastomerelement (3) zumindest ein erstes Teilelement (31) umfasst, welches sich über einen ersten Umfangsbereich erstreckt, und zumindest ein zweites Teilelement (32), welches sich über einen zweiten Umfangsbereich erstreckt und bezüglich der Mittelachse (M) des Trägerelements (2) koaxial mit radialem Abstand zum ersten Teilelement (31) angeordnet ist.

4. Anschlagdämpfer nach Anspruch 3, **dadurch gekennzeichnet, dass** zumindest eines der Teilelemente (31, 32) ringförmig ausgebildet ist.

5. Anschlagdämpfer nach Anspruch 3, **dadurch gekennzeichnet, dass** das erste Teilelement (31) eine größere Abmessung (D) in axialer Richtung hat als das zweite Teilelement (32).

6. Anschlagdämpfer nach Anspruch 1, **dadurch gekennzeichnet, dass** das Elastomerelement (3) einen größeren Außendurchmesser hat als das Trägerelement (2).

7. Anschlagdämpfer nach Anspruch 3, **dadurch gekennzeichnet, dass** das erste und das zweite Teilelement (31, 32) über mindestens ein Verbindungselement (4) miteinander verbunden sind, das sich über einen dritten Umfangsbereich erstreckt, der kleiner ist als der erste und zweite Umfangsbereich.

8. Anschlagdämpfer nach Anspruch 7, **dadurch gekennzeichnet, dass** eine Mehrzahl von Verbindungselementen (4) gleichmäßig über den Umfang des Trägerelements (2) verteilt angeordnet ist.

9. Anschlagdämpfer nach Anspruch 7, **dadurch gekennzeichnet, dass** das Verbindungselement (4) in axialer Richtung eine kleinere Abmessung (v) hat als das erste und zweite Teilelement (31, 32).

10. Anschlagdämpfer nach Anspruch 1, **dadurch gekennzeichnet, dass** das Elastomerelement (3) eine zumindest abschnittweise konisch geformte axiale Stirnseite (33) aufweist.

11. Anschlagdämpfer nach Anspruch 1, **dadurch gekennzeichnet, dass** das Elastomerelement (3) stoffschlüssig mit dem Trägerelement (2) verbunden ist.

12. Anschlagdämpfer nach Anspruch 1, **dadurch gekennzeichnet, dass** das Elastomerelement (3) mit der außen umlaufenden Mantelfläche (24) verbunden ist.

13. Anschlagdämpfer nach Anspruch 1, **dadurch gekennzeichnet, dass** das Elastomerelement (3) mit der zweiten Stirnseite (22) verbunden ist.

## Claims

1. Stop damper (1) for a track rod or an axial ball bearing, comprising a circularly annular carrier element (2) which has a first and second axial end side (21, 22), and shell faces (23, 24) which extend between them, and a central opening, by way of which the carrier element is attached on a track rod or an axial ball bearing, an elastomer element (3) being fastened axially on the first axial end side (21) of the carrier element (2) on the first axial end side (21), and the elastomer element (3) surrounding the central opening with its inner edge (321) a free region of the axial end side (21) of the carrier element (2), and which elastomer element (3) projects from the axial end side (21) in the axial direction, **characterized in that** the elastomer element (3) has at least one axially continuous aperture (5) within the circularly annular end-side surface region of the carrier element (2), which aperture (5) does not extend beyond the region of the central opening of the annular carrier element (2).

2. Stop damper according to Claim 1, **characterized in that** a plurality of apertures (5) are arranged distributed uniformly over the circumference of the elastomer element (3).

3. Stop damper according to Claim 1, **characterized in that** the elastomer element (3) comprises at least one first part element (31) which extends over a first circumferential region, and at least one second part element (32) which extends over a second circumferential region and is arranged at a radial spacing from the first part element (31) coaxially with regard to the centre axis (M) of the carrier element (2) .

4. Stop damper according to Claim 3, **characterized in that** at least one of the part elements (31, 32) is of annular configuration.

5. Stop damper according to Claim 3, **characterized in that** the first part element (31) has a greater dimension (D) in the axial direction than the second part element (32).

6. Stop damper according to Claim 1, **characterized in that** the elastomer element (3) has a greater external diameter than the carrier element (2).

7. Stop damper according to Claim 3, **characterized in that** the first and the second part element (31, 32) are connected to one another via at least one connecting element (4) which extends over a third circumferential region which is smaller than the first and second circumferential region.

8. Stop damper according to Claim 7, **characterized in that** a plurality of connecting elements (4) are arranged distributed uniformly over the circumference of the carrier element (2).

9. Stop damper according to Claim 7, **characterized in that** the connecting element (4) has a smaller dimension (v) in the axial direction than the first and second part element (31, 32).

10. Stop damper according to Claim 1, **characterized in that** the elastomer element (3) has an axial end side (33) which is conically shaped at least in sections.

11. Stop damper according to Claim 1, **characterized in that** the elastomer element (3) is connected to the carrier element (2) in an integrally joined manner.

12. Stop damper according to Claim 1, **characterized in that** the elastomer element (3) is connected to the outer circumferential shell face (24).

13. Stop damper according to Claim 1, **characterized in that** the elastomer element (3) is connected to the second end side (22).

## Revendications

1. Amortisseur de butée (1), destiné à une barre d'accouplement ou une articulation à rotule axiale, comprenant un élément de support annulaire (2) qui comporte une première et une deuxième face d'extrémité axiale (21, 22), et des surfaces latérales (23, 24) s'étendant entre celles-ci et une ouverture centrale au moyen de laquelle l'élément de support est monté sur une barre d'accouplement ou une articulation à rotule axiale, sur la première face d'extrémité axiale (21) un élément élastomère (3) étant fixé axialement sur la première face d'extrémité axiale (21) de l'élément de support (2), et l'élément élastomère (3) délimitant l'ouverture centrale par le bord intérieur (321) de celle-ci une zone libre de la face d'extrémité axiale (21) de l'élément de support (2), et le faisant saillie de la face d'extrémité axiale (21) dans la direction axiale,
**caractérisé en ce que**
l'élément élastomère (3) comporte, à l'intérieur de la zone de surface d'extrémité annulaire de l'élément de support (2), au moins un passage (5) axialement traversant qui ne s'étend pas sur la zone de l'ouverture centrale de l'élément de support annulaire (2) .

2. Amortisseur de butée selon la revendication 1,
**caractérisé en ce que** plusieurs passages (5) sont répartis uniformément sur la périphérie de l'élément élastomère (3).

3. Amortisseur de butée selon la revendication 1,
**caractérisé en ce que** l'élément élastomère (3) comprend au moins un premier sous-élément (31) qui s'étend sur une première zone périphérique, et au moins un deuxième sous-élément (32) qui s'étend sur une deuxième zone périphérique et qui est disposé, par rapport à l'axe médian (M) de l'élément de support (2), coaxialement à une distance radiale du premier sous-élément (31).

4. Amortisseur de butée selon la revendication 3,
**caractérisé en ce que** l'un au moins des sous-éléments (31, 32) est annulaire.

5. Amortisseur de butée selon la revendication 3,
**caractérisé en ce que** le premier sous-élément (31) a une plus grande dimension (D) dans la direction axiale que le deuxième sous-élément (32).

6. Amortisseur de butée selon la revendication 1,
**caractérisé en ce que** l'élément élastomère (3) a un diamètre extérieur supérieur à celui de l'élément de support (2).

7. Amortisseur de butée selon la revendication 3,
**caractérisé en ce que** les premier et deuxième sous-éléments (31, 32) sont reliés entre eux par l'intermédiaire d'au moins un élément de liaison (4) qui s'étend sur une troisième zone périphérique plus petite que les première et deuxième zones périphériques.

8. Amortisseur de butée selon la revendication 7,
**caractérisé en ce que** plusieurs éléments de liaison (4) sont répartis uniformément sur la périphérie de l'élément de support (2).

9. Amortisseur de butée selon la revendication 7,
**caractérisé en ce que** l'élément de liaison (4) a dans la direction axiale une dimension (v) qui est inférieure à celle des premier et deuxième sous-éléments (31, 32).

10. Amortisseur de butée selon la revendication 1,
**caractérisé en ce que** l'élément élastomère (3) comporte une face d'extrémité axiale (33) de forme au moins partiellement conique.

11. Amortisseur de butée selon la revendication 1,
**caractérisé en ce que** l'élément élastomère (3) est relié par une liaison de matière à l'élément de support (2) .

12. Amortisseur de butée selon la revendication 1,
**caractérisé en ce que** l'élément élastomère (3) est relié à la surface latérale périphérique extérieure (24) .

13. Amortisseur de butée selon la revendication 1,
**caractérisé en ce que** l'élément élastomère (3) est relié à la deuxième face d'extrémité (22).
